(19) **Europäisches Patentamt**

**European Patent Office**

**Office européen des brevets**

(11) **EP 0 854 235 B1**

(12) **EUROPEAN PATENT SPECIFICATION**

(45) Date of publication and mention
of the grant of the patent:
**30.03.2005 Bulletin 2005/13**

(51) Int Cl.[7]: **E01C 7/18**, C08L 95/00

(21) Application number: **97500011.8**

(22) Date of filing: **21.01.1997**

(54) **Asphalt rejuvenating products suitable for use in road pavement recycling**

Asphaltregenerierungsprodukte geeignet zur Verwendung im Strassenbeschichtungsrecycling

Produits de régénération de l'asphalte utilisable pour le recyclage de revêtement routier

(84) Designated Contracting States:
**AT BE CH DE DK FI FR GB GR IE IT LI LU MC NL PT SE**

(43) Date of publication of application:
**22.07.1998 Bulletin 1998/30**

(73) Proprietor: **REPSOL PETROLEO S.A.**
**E-28046 Madrid (ES)**

(72) Inventors:
• **Caba, Jesus Sanchez**
**Madrid (ES)**
• **Duenas, Antonio Páez**
**Madrid (ES)**

(74) Representative: **Del Santo Abril, Natividad**
**Oficina Garcia Cabrerizo, S.L.,**
**Vitruvio, 23**
**28006 Madrid (ES)**

(56) References cited:
**EP-A- 0 182 937**    **US-A- 4 373 961**
**US-A- 4 549 834**    **US-A- 4 904 305**

• **DATABASE WPI Section Ch, Week 8405 Derwent Publications Ltd., London, GB; Class H08, AN 84-027539 XP002034487 & JP 58 219 260 A (TOA DORO KOGYO KK) , 20 December 1983**

**Description**

Worn-out roads at the end of their life cycle present a latent value in the form of their component materials, a value that is frequently disregarded when the road is put back in service.

Clearance gage problems are frequently encountered in road repair work, e.g. in the stretch passing under a bridge, in view that the roadbed is prevented from having increased thicknesses in order to avoid certain vehicles from impacting with their upper portion.

Likewise, in the city it is usually convenient to limit the thickness of the roadbed in order to keep the sidewalks above the road level.

The wearing-out of a road is usually the result of the aging of the asphalt. With the passing of time, the products in the asphalt turn heavy, transforming the asphalt into a fragile product leading to road exhaustion through fatigue. In extreme cases, the road develops a technically so-called "crocodile skin" surface, which is a symptom of the total exhaustion of the roadbed.

In order to put the road back in service while taking advantage of the residual value of its components and preventing a considerable increase in thickness, recycling of part of the exhausted asphalt is resorted to.

Traditionally, the old pavement is milled to various thicknesses, the milled material is mixed with several components that provide it with mechanical strength, and the product is spread out and compacted. The compounds most frequently used in recycling are cement, asphalt, fluidized asphalt and asphalt emulsions. These products are limited to providing the milled pavement with a new binding layer and leaving the aged asphalt as it is. Such recycling procedures present a drawback in that the aged asphalt does not bind with the new pavement, so that considerable amounts of binder must de added to the milled material, as in the case of a completely new mixture. This treatment is therefore extremely expensive.

This invention describes asphalt rejuvenating products applicable to road recycling. The products are advantageous in that they allow reuse of the aged asphalt and so considerably reduce the amount of new binder to be added, resulting in cost saving as compared to more conventional procedures.

The rejuvenating products which are the object of this invention contribute the components lost in the asphalt as a result of aging, giving it back its original physical and chemical characteristics.

These rejuvenating products may be applied both in hot condition and in fluidized condition with the use of an adequate solvent, i.e. an emulsion. Mixing with the milled product can be done at the work site or at a central facility, depending on the work conveniences.

The study of the physical-chemical nature of the asphalt and the changes as a result of its aging is a very complex issue and the object of extensive research. For practical purposes, the asphalt is admittedly composed of five groups which may be separated by following the Rostler method defined in Standard ASTM D2006/70. Each group is composed of a plurality of chemical compounds and responds in a predictable manner. In order to maintain the physical-chemical structure in the asphalt, it is important that each of the five groups is present in a very tight relationship, thus ensuring a good response in the road pavement.

There are three indices which determine the appropriate condition of an asphalt for road use:

$$\text{Chemical Reactivity Relationship (CRR)} = \frac{N + A1}{P + A2}$$

(with values between 0.4 and 1.5)

$$\text{Colloidal instability (1c)} = \frac{As + P}{N + A1 + A2}$$

(with values below 1)

$$\text{Compactibility (C)} = \frac{N}{P}$$

(with values above 0.5)

The meaning of the symbols is as follows:

As =    Asphaltenes
N =    Nitrogenated bases (polar)
A1 =    First acidified
A2 =    Second acidified

P =      Saturated,

as defined in Standard ASTM D2006/70.

As a result of the aging of the asphalt, the values of the above indices lie beyond the specified intervals.

US-A-4 549 834 which belongs to the state of the art discloses a process and composition for improving asphalt paving by mining existing roads for their asphalt content, blending the mined or recycled asphalt with new asphalt which is unusually high in resin content to provide a pavement of increased ductility and improved penetration characteristics.

According to the invention as defined in claim 1, a composition with a penetration according to NLT 124/84 above 200 (1/10 mm) and below 350 (1/10 mm) comprising components with asphalts deriving from Middle East oils with API degrees between 29 and 44, may act in rejuvenating aged asphalts.

Traditionally, these asphalts are manufactured on the basis of a hard component, asphalt from asphalt removal in oil refining operations and/or any asphalt with a penetration (per NLT 124/84) of between 10 and 200 (1/10 mm), plus a soft component, a penetration vacuum residue according to NLT 124/84 above 200 deriving from oil refining operations. In formulating the regenerating asphalt, from 1% to 99% of the hard component is used and from 1% to 99% of the soft component is used, so that both add up to 100%. These regenerating asphalts, when mixed in adequate proportions with aged asphalts, lead to an increase in maltenes, as a result of which appropriate asphalt quality measurement indices lie within a convenient interval. The proportion of these regenerating asphalts in the new mixture is between 0.01% and 10%, preferably between 0.1% and 5%.

It has also been discovered that, in the event that the rejuvenating asphalts are formulated by adding various quantities of aromatic cuts or fractions deriving from oil refining operations to the starting asphalts, their rejuvenating capacity increases. The start-off is one of the above mentioned hard components, to which is added between 1% and 80% by total weight of the rejuvenating asphalt an extract and/or distillate of an aromatic nature deriving from oil refining operations. The regenerating asphalt is incorporated in the new mixture in a percentage comprised between 0.01% and 10%, preferably between 0.1% and 5%.

In order to establish the exact percentages in which the regenerating asphalt is incorporated in the mixture, old asphalt is extracted from a representative sample of the road pavement, according to Standard NLT 353/85. To this old asphalt sample are added increasing quantities of any of the two previously mentioned regenerating asphalts, the resulting mixtures being then analyzed according to Standard ASTM D2006/70 and their penetration measured.

After analysis, the above indices are calculated and a percentage of regenerating asphalt is selected that will lead to a final penetration nearer the desired penetration, with indices within the interval of the required values.

Recycling may be done both in hot and cold condition, and both at the work site and at a central facility. Details of the hot operation are not provided, as they are well known to all recycling technicians.

Regarding cold recycling, this can be implemented with the use of fluidized asphalts or emulsions.

Fluidized asphalts are produced by adding a fluidizer to an asphalt in a proportion between 0 and 20%. Fluidizers are well known in the state of the art, deriving both from coal distillation and oil refining. These products present a distillation interval comprised between 60 and 300°C, although the ones presenting a distillation interval comprised between 150 and 250°C are preferred. By using fluidized regenerating asphalts, the pavement can be regenerated at the work site by mixing an adequate quantity of milled material with an adequate quantity of the regenerated material obtained following the above mentioned indices analysis. The proportion in which these regenerating asphalts are incorporated in the new mixture is between 0.01% and 92%, preferably between 0.1% and 85%.

In the event of cold recycling with the use of emulsions, the most suitable emulsions are those having an average breaking or a slow breaking index. Average breaking emulsions are made from asphalts in which a fluidizer has been added in a proportion of between 0 and 20%. To produce the emulsion, the fluidized regenerating asphalts are dispersed in water by means of colloidal mills. The proportion of asphalt in water is between 30% and 90%, preferably between 50% and 75%.

In order to keep the emulsion stable, an emulsifier salt of either a cationic or an anionic nature must be used, as is well known in the state of the art. The concentration of the emulsifier in the emulsion is between 0 and 10%, preferably between 0.01% and 5%.

As cationic emulsifiers, diamines, amidoamines or fat imidazolines, or mixtures thereof, are used, of which sufficient products are available in the market.

To form the salt, a mineral acid such as hydrochloric, hydrobromic, sulfuric or phosphoric acid, or mixtures thereof, is made to react in an aqueous medium in a quantity such that the pH in the aqueous solution is between 1 and 7.

Regarding the anionic emulsifiers, tall oil or colophony, or a mixture thereof, is used.

To form the salt, the emulsifier is made to react in an aqueous medium with a base such as sodium hydroxide, potassium hydroxide or ammonia, until the pH in the aqueous solution is between 7 and 14.

Slow breaking emulsions are fabricated with non-fluidized asphalts. The regenerating asphalts are thus dispersed in water by means of colloidal mills. The proportion of asphalt in water is usually between 30% and 90%, preferably between 50% and 75%. In order to maintain the emulsion stable, a cationic or anionic type emulsion salt must be used. The percentage of said emulsifier in the emulsion is between 0 and 10%, preferably between 0.1% and 5%.

As cationic emulsifiers, polyamines, quaternary ammonium salts, epoxidized polyamides or mixtures thereof are used, sufficient products of which are available in the market.

To form the salt, the emulsifier is made to react in an aqueous medium with a mineral acid such as hydrochloric, hydrobromic, sulfuric or phosphoric acid, or mixtures thereof, in a quantity such that the final pH in the aqueous solution is between 1 and 7. If necessary, a stability aid, e.g. calcium chloride, may be added in a percentage between 0 and 1%.

Vinsol resin is used as an anionic emulsifier. To form the salt, the resin is made to react in an aqueous medium with a base such as sodium hydroxide, potassium hydroxide or ammonia in a quantity such that the final pH in the medium is between 7 and 14.

In cold emulsion technology, the percentage must be optimized by the use of pre-enveloped water; if necessary, said pre-enveloped water is used both in the mixture and in the emulsion. This is implemented by procedures well known in the state of the art, specifically involving the Marshall or immersion-compression tests.

By following one of the previously described procedures for applying the rejuvenating procedures of this patent at the work site, pavement recycling is achieved wherein the response of the old asphalt is that of a new asphalt, avoiding unnecessary waste in aggregate and asphalt.

The present invention and the spirit thereof is illustrated by the following non-limiting examples.

EXAMPLE 1 - HOT RECYCLING

From a portion of an aged pavement milling sample, the binder is recovered with dichloromethane according to Standard NLT 353/85. Another portion of the same sample is mixed at 140°C with 5% of rejuvenating asphalt composed of 70% Kirkuk 40/50 asphalt and 30% Bright Stock furfural extract. From the aged mixture, mixed with the rejuvenating asphalt, the rejuvenated binder is recovered according to Standard NLT 353/95. Table I shows the results of the analysis as compared to that of a commercial 60/70 asphalt.

Table I -

| Comparison of different asphalts | | | |
|---|---|---|---|
| | Aged asphalt | Regenerated asphalt | Commercial 60/70asphalt |
| Penetration at 25°C per NLT 124/84 (1/10 mm) | 8 | 67 | 68 |
| C | 3.82 | 2.94 | 1.60 |
| CRR | 1.78 | 0.99 | 1.04 |
| IC | 2.12 | 0.82 | 0.61 |

The above table shows that the asphalt with indices exceeding the adequate values is regenerated, said values being maintained within an appropriate interval.

EXAMPLE 2 - COLD RECYCLING WITH FLUIDIZED ASPHALT

To a portion of an aged sample of the previous example is added 5.1% of a fluidized asphalt fabricated with 56% of Kirkuk 40/50 asphalt, 24% of Bright Stock furfural extract and 20% of a light coal naphtha. Mixing is at ambient temperature. The mixture is maintained. The binder is then recovered according to Standard NLT 353/95. Table II shows the results of the recovered binder analysis.

Table II -

| Analysis results | | | |
|---|---|---|---|
| | Aged asphalt | Regenerated asphalt | Commercial 60/70 asphalt |
| Penetration at 25°C per NLT 124/84 (1/10 mm) | 8 | 68 | 68 |
| C | 3.80 | 2.20 | 1.60 |
| CRR | 1.78 | 0.89 | 1.04 |

Table II -   (continued)

| Analysis results | | | |
|---|---|---|---|
| | Aged asphalt | Regenerated asphalt | Commercial 60/70 asphalt |
| IC | 2.12 | 0.70 | 0.61 |

The regeneration of the aged asphalt is shown once more.

EXAMPLE 3 - COLD RECYCLING WITH EMULSION

To a portion of an aged sample was added 2% of water and 3% of a regenerating asphalt emulsion. The 2% water content was optimized according to the immersion-compression procedure (NLT 162/84).

The regenerating asphalt was fabricated with 60% of light 40/50 Arabian asphalt and 40% of Bright Stock furfural extract. The emulsion was formulated with 62% of the above regenerating asphalt, 0.7% fat polyamine, hydrochloric acid to a pH=2.5 and the remainder of water up to 100%. Table IV shows the results of the recovered binder analysis.

Table III -

| Immersion-compression results | |
|---|---|
| Dry strength (Kgf) | 2270 |
| Strength after immersion (Kgf) | 2026 |
| Strength maintained (%) | 89 |

Table IV -

| Binder results after extraction | | |
|---|---|---|
| | Aged asphalt | Regenerated asphalt |
| Penetration at 25°C per NLT 124/84 (1/10 mm) | 11 | 28 |
| C | 0.77 | 0.92 |
| IC | 1.25 | 0.94 |
| CRR | 0.69 | 0.73 |

These two tables reveal the benefits of recycling the pavements with the regenerating asphalt emulsions which are the object of this patent.

## Claims

1.   A composition for rejuvenating aged road asphalt applicable to the recycling of road pavements, said composition having a penetration at 25°C according to NLT 124/84 between 200 and 350 (1/10 mm), obtained by mixing a component i) with component ii) or with 1-80% by total weight of the rejuvenating asphalt of component iii), wherein
    component i) is a component selected from the group consisting of an asphalt from asphalt removal, an asphalt with a penetration according to NLT 124/84 between 10 and 200 (1/10 mm), and mixtures thereof, wherein said asphalts derive from a Middle East oil with an API grade between 29 and 44;
    component ii) is a vacuum residue deriving from a Middle East oil with an API grade between 29 and 44, said vacuum residue having a penetration according to NLT 124/84 above 200 (1/10 mm); and
    component iii) is a distillate and/or extract of an aromatic nature deriving from oil refining operations.

2.   Composition according to claim 1, which further comprises up to 20% of a fluidizer, said fluidizer deriving from coal distillation or oil refining with a distillation interval between 60°C and 300°C, preferably between 150°C and 250°C.

3.   An emulsion for rejuvenating aged road asphalt applicable to the recycling of road pavements, comprising

a) 30% to 90% by total weight, preferably 50% to 75%, of a composition according to claim 2;

b) 0% to 10% by total weight of an emulsifier salt; and

c) water, in an amount sufficient up to 100%.

4. Emulsion according to claim 3, wherein the emulsifier salt is obtained by reacting, in an aqueous medium, a cationic emulsifier selected from the group consisting of diamines, amidoamines, fat imidazolines, and mixtures thereof, with a mineral acid selected from the group consisting of hydrochloric acid, hydrobromic acid, sulfuric acid, phosphoric acid and mixtures thereof, in a quantity such that the pH in the aqueous solution, after reacting with the emulsifier, ranges between 1 and 7.

5. Emulsion according to claim 3, wherein the emulsifier salt is obtained by reacting, in an aqueous medium, an anionic emulsifier selected from the group consisting of tall oil, colophony, and mixtures thereof, with a base selected from the group consisting of sodium hydroxide, potassium hydroxide, ammonia and mixtures thereof in a percentage such that, after reacting with the emulsifier in the aqueous phase, the pH in the solution ranges between 7 and 14.

6. An emulsion for rejuvenating aged road asphalt applicable to the recycling of road pavements, comprising

a) 30% to 90% by total weight, preferably 50% to 75%, of a composition according to claim 1 ;

b) 0% to 10% by total weight of an emulsifier salt; and

c) water, in an amount sufficient up to 100%.

7. Emulsion according to claim 6, wherein the emulsifer salt is obtained by reacting, in an aqueous medium, a cationic emulsifier selected from the group consisting of quaternary ammonium salts, epoxidized polyamides and mixtures thereof, with a mineral acid selected from the group consisting of hydrochloric acid, hydrobromic acid, sulfuric acid, phosphoric acid and mixtures thereof, in a quantity such that the pH in the aqueous solution, after reacting with the emulsifier, ranges between 1 and 7.

8. Emulsion according to claim 6, wherein the emulsifier salt is obtained by reacting, in an aqueous medium, vinsol resin with a base selected from the group consisting of sodium hydroxide, potassium hydroxide, ammonia and mixtures thereof in a percentage such that, after reacting with the emulsifier in the aqueous phase, the pH in the solution ranges between 7 and 14.

9. A process for rejuvenating aged road asphalt which comprises mixing an aged road asphalt with a composition according to claim 1 or 2 or with an emulsion according to any of claims 3 to 8.

**Patentansprüche**

1. Zusammensetzung zur Regenerierung von gealtertem Straßenasphalt, die zur Wiederverwertung von Straßenbeläge anwendbar ist, wobei die besagte Zusammensetzung gemäß der Norm NLT 124/84 bei 25°C eine Durchdringung zwischen 200 und 350 (1/10 mm) aufweist, die durch Mischen eines Bestandteiles i) mit einem Bestandteil ii) oder mit 1-80% des Bestandteiles iii), bezogen auf das Gesamtgewicht des regenerierenden Asphaltes, wobei der Bestandteil i) ein Bestandteil ist, der aus der Gruppe bestehend aus einem aus einer Asphaltentfernung abgeleiteten Asphalt, einem Asphalt mit einer Durchdringung gemäß der Norm NLT 124/84 zwischen 10 und 200 (1/10 mm) und Mischungen derselben ausgewählt wird, wobei die besagten Asphalte aus einem Erdöl des Mittleren Ostens mit einem API-Grad zwischen 29 und 44 abgeleitet werden; der Bestandteil ii) ein aus einem Erdöl des Mittleren Ostens mit einem API-Grad zwischen 29 und 44 abgeleiteter Vakuumrückstand ist, wobei der besagte Vakuumrückstand gemäß der Norm NLT 124/84 eine Durchdringung größer als 200 (1/10 mm) aufweist; und der Bestandteil iii) ein aus Erdölraffinationsprozessen abgeleitetes Destillat und/oder Extrakt aromatischer Art ist.

2. Zusammensetzung nach Anspruch 1, die zusätzlich bis 20% eines Verdünnungsmittels umfasst, wobei das besagte Verdünnungsmittel aus der Kohledestillation oder der Erdölraffination in einem Destillationsbereich zwischen 60°C und 300°C, bevorzugt zwischen 150°C und 250°C, abgeleitet wird.

**3.** Emulsion zur Regenerierung von gealtertem Straßenasphalt, die zur Wiederverwertung von Straßenbeläge anwendbar ist, die folgendes umfasst

 a) 30% bis 90%, bevorzugt 50% bis 70%, an einer Zusammensetzung nach Anspruch 2, bezogen auf das Gesamtgewicht;
 b) 0% bis 10% an einem emulgierenden Salz, bezogen auf das Gesamtgewicht; und
 c) Wasser, in einer ausreichenden Menge bis 100%.

**4.** Emulsion nach Anspruch 3, wobei das emulgierende Salz dadurch erhalten wird, dass ein kationischer Emulgator, der aus der Gruppe bestehend aus Diaminen, Amidoaminen, fetten Imidazolinen und Mischungen derselben ausgewählt wird, mit einer solchen Menge einer Mineralsäure, die aus der Gruppe bestehend aus Salzsäure, Bromwasserstoffsäure, Schwefelsäure, Phosphorsäure und Mischungen derselben ausgewählt wird, in einem wässrigen Medium in Reaktion gebracht wird, dass der pH der wässrigen Lösung nach der Reaktion mit dem Emulgator zwischen 1 und 7 liegt.

**5.** Emulsion nach Anspruch 3, wobei das emulgierende Salz dadurch erhalten wird, dass ein anionischer Emulgator, der aus der Gruppe bestehend aus Harzöl ("tall oil"), Kolophonium und Mischungen derselben ausgewählt wird, mit einem solchen Anteil einer Base, die aus der Gruppe bestehend aus Natriumhydroxid, Kaliumhydroxid, Ammoniak und Mischungen derselben ausgewählt wird, in einem wässrigen Medium in Reaktion gebracht wird, dass der pH der Lösung nach der Reaktion mit dem Emulgator in der wässrigen Phase zwischen 7 und 14 liegt.

**6.** Emulsion zur Regenerierung von gealtertem Straßenasphalt, die zur Wiederverwertung von Straßenbeläge anwendbar ist, die folgendes umfasst

 a) 30% bis 90% an einer Zusammensetzung nach Anspruch 1, bevorzugt 50% bis 75%, bezogen auf das Gesamtgewicht;
 b) 0% bis 10% an einem emulgierendem Salz, bezogen auf das Gesamtgewicht; und
 c) Wasser, in einer ausreichenden Menge bis 100%.

**7.** Emulsion nach Anspruch 6, wobei das emulgierende Salz dadurch erhalten wird, dass ein kationischer Emulgator, der aus der Gruppe bestehend aus quaternären Ammoniumsalzen, epoxidierten Polyamiden und Mischungen derselben ausgewählt wird, mit einer solchen Menge einer Mineralsäure, die aus der Gruppe bestehend aus Salzsäure, Bromwasserstoffsäure, Schwefelsäure, Phosphorsäure und Mischungen derselben ausgewählt wird, in einem wässrigen Medium in Reaktion gebracht wird, dass der pH der wässrigen Lösung nach der Reaktion mit dem Emulgator zwischen 1 und 7 liegt.

**8.** Emulsion nach Anspruch 6, wobei das emulgierende Salz dadurch erhalten wird, dass Vinsol-harz mit einem solchen Anteil einer Base, die aus der Gruppe bestehend aus Natriumhydroxid, Kaliumhydroxid, Ammoniak und Mischungen derselben ausgewählt wird, in einem wässrigen Medium in Reaktion gebracht wird, dass der pH der Lösung nach der Reaktion mit dem Emulgator in der wässrigen Phase zwischen 7 und 14 liegt.

**9.** Verfahren zur Regenerierung von gealtertem Straßenasphalt, welches das Mischen eines gealterten Straßenasphaltes mit einer Zusammensetzung nach Anspruch 1 oder 2, mit einer Emulsion nach einem der Ansprüche 3 bis 8 umfasst.

**Revendications**

**1.** Composition pour rajeunir l'asphalte routier vieilli applicable au recyclage de revêtements routiers, ladite composition ayant une pénétration à 25°C, selon la norme NLT 124/84, d'environ 200 à 350 (1/10 mm), obtenue en mélangeant un composant i) avec un composant ii) ou avec 1-80% en poids total de l'asphalte rajeunissant du composant iii), dans laquelle
 le composant i) est un composant sélectionné parmi le groupe qui consiste à un asphalte dérivé d'une élimination d'asphalte, un asphalte ayant une pénétration, selon la norme NLT 124/84, d'environ 10 à 200 (1/10 mm), et des mélanges de ceux-ci, dans lequel lesdits asphaltes sont dérivés d'un pétrole du Moyen Orient avec un degré API d'environ 29 à 44;

le composant ii) est un résidu sous vide qui est dérivé d'un pétrole du Moyen Orient avec un degré API d'environ 29 à 44, ledit résidu sous vide ayant une pénétration, selon la norme NLT 124/84, supérieure à 200 (1/10 mm); et

le composant iii) est un distillat et/ou un extrait à nature aromatique qui est dérivé d'opérations de raffinage de pétrole.

2. Composition selon la revendication 1, comprenant en outre jusqu'à 20% d'un fluidifiant, ledit fluidifiant étant dérivé de la distillation de charbon ou le raffinage de pétrole avec un intervalle de distillation allant de 60°C à 300°C, de préférence entre 150°C et 250°C.

3. Emulsion pour rajeunir l'asphalte routier vieilli applicable au recyclage de revêtements routiers, comprenant

a) entre 30% et 90% en poids total, de préférence entre 50% et 70%, d'une composition selon la revendication 2;
b) entre 0% et 10% en poids total d'un sel émulsionnant; et
c) de l'eau, dans une quantité suffisante jusqu'à 100%.

4. Emulsion selon la revendication 3, dans laquelle le sel émulsionnant est obtenu en réagissant, dans un milieu aqueux, un émulsionnant cationique sélectionné parmi le groupe qui consiste à des diamines, amidoamines, imidazolines grasses, et des mélanges de celles-ci, avec un acide minéral sélectionné du groupe qui consiste à l'acide chlorhydrique, acide bromhydrique, acide sulfurique, acide phosphorique et des mélanges de ceux-ci, dans une telle quantité que le pH de la dissolution aqueuse, après avoir réagi avec l'émulsionnant, oscille entre 1 et 7.

5. Emulsion selon la revendication 3, dans laquelle le sel émulsionnant est obtenu en réagissant, dans un milieu aqueux, un émulsionnant anionique sélectionné parmi le groupe consistant à de l'huile de résine ("tall oil"), colophane, et des mélanges de celles-ci, avec une base sélectionnée parmi le groupe consistant à de l'hydroxyde de sodium, hydroxyde de potassium, ammoniac et des mélanges de ceux-ci dans un tel pourcentage qu'après avoir réagi avec l'émulsionnant lors de la phase aqueuse, le pH de la dissolution oscille entre 7 et 14.

6. Emulsion pour rajeunir l'asphalte routier vieilli applicable au recyclage de revêtements routiers, comprenant

a) entre 30% et 90% en poids total, de préférence entre 50% et 75%, d'une composition selon la revendication 1;
b) entre 0% et 10% en poids total d'un sel émulsionnant; et
c) de l'eau, dans une quantité suffisante jusqu'à 100%.

7. Emulsion selon la revendication 6, dans laquelle le sel émulsionnant est obtenu en réagissant, dans un milieu aqueux, un émulsionnant cationique sélectionné parmi le groupe consistant à des sels d'ammonium quaternaire, des polyamides époxidées et des mélanges de celles-ci, avec un acide minéral sélectionné parmi le groupe consistant à l'acide chlorhydrique, acide bromhydrique, acide sulfurique, acide phosphorique et des mélanges de ceux-ci, dans une telle quantité que le pH de la dissolution aqueuse, après avoir réagi avec l'émulsionnant, oscille entre 1 et 7.

8. Emulsion selon la revendication 6, dans laquelle le sel émulsionnant est obtenu en réagissant, dans un milieu aqueux, de la résine Vinsol avec une base sélectionnée parmi le groupe consistant à l'hydroxyde de sodium, hydroxyde de potassium, ammoniac et des mélanges de ceux-ci dans un tel pourcentage qu'après avoir réagi avec l'émulsionnant lors de la phase aqueuse, le pH de la dissolution oscille entre 7 et 14.

9. Procédé pour rajeunir l'asphalte routier vieilli, consistant à mélanger un asphalte routier vieilli, avec une composition selon la revendication 1 ou 2, avec une émulsion selon l'une quelconque des revendications 3 à 8.